# EUROPEAN PATENT APPLICATION

(11) **EP 4 792 775 A1**
(43) Date of publication of application: **19.08.2026**
(21) Application number: 26156015.5
(22) Date of filing: 03.02.2026
(51) Int. Cl.: A61C 8/00

(54) **IMPROVED DENTAL IMPLANT**

(30) Priority: 18.02.2025 IT 202500003114
(71) Applicant: LAKE COMO DENTAL GRECO SRL, 22100 COMO (IT)
(72) Inventor: GRECO, ALESSANDRO, 22070 CASNATE CON BERNATE (CO) (IT); ACERBONI, LUIGI, 23832 CRANDOLA VALSASSINA (LC) (IT)
(74) Representative: Ottazzo, Marco Francesco Agostino

(57) **Abstract**

A dental implant (10) comprising an endosseous screw (12) which in turn comprises an infra-osseous implant portion (14) and an extra-osseous top portion (16), or prosthetic abutment is described. The infra-osseous implant portion (14) and the prosthetic abutment (16) are integrally formed in a single piece. The dental implant (10) further comprises a hollow cap (28) which connects with the prosthetic abutment (16) by conometric coupling. The prosthetic abutment (16) is provided with an internally threaded blind hole (24), which houses a screw-shaped activator/extractor component (36). This screw (36) acts as an extractor element for the removal of the cap (28), once firmly connected to the prosthetic abutment (16), by means of a through hole (34) provided on such cap (28). The same screw (36) is also provided with an internal nut-screw (52), which ensures through a suitable tool, to obtain both the conometric coupling between the cap (28) and the prosthetic abutment (16) and an effective control of the tightening force, as well as the connection force of the components. The screw (36) therefore constitutes an activation/extraction element of the cap (28) from the prosthetic abutment (16), but not a connecting element.

## Description

The present invention generally relates to a dental implant and, in particular, a one-stage/monolithic dental implant, that is to say with an integrated prosthetic abutment, which allows a dental prosthesis to be connected by means of a so-called "conometric" connection.

As is known, a dental implant is a fixed prosthetic device suitable for filling the space left by one or more missing or extracted teeth. A dental implant typically comprises three main components: an endosseous screw, a prosthetic abutment, and a dental prosthesis (also known as crown).

The endosseous screw is intended to simulate the root of a real tooth and is therefore designed to be inserted into the mandibular or maxillary bone tissue of a patient. The prosthetic abutment is the connecting element between the endosseous screw and the dental crown. The dental crown has the function of replacing a corresponding missing tooth and is basically an artificial tooth. A secondary prosthetic component called cap is placed between the prosthetic abutment and the dental crown. The cap is integrated into the dental crown once the dental implant has been secured.

A dental implant can be of the so-called one-stage type. In this case, the endosseous screw is integrally formed in a single piece with the prosthetic abutment. This prosthetic abutment is therefore intended to protrude from the gingiva.

Alternatively, a dental implant can be of the so-called two-stage type. In this case, the prosthetic abutment is separate from the endosseous screw. The endosseous screw is first inserted into the mandibular or maxillary bone, while the prosthetic abutment is applied in a second stage, typically when the osseointegration phase of the endosseous screw is completed.

For a more detailed description of the dental implants currently existing, reference is made to the following documents:
- Laleman I., Lambert F.: "Implant connection and abutment selection as a predisposing and/or precipitating factor for peri-implant diseases: A review", year of publication 2023;
- Koutouzis T.: "Implant-abutment connection as contributing factor to peri-implant diseases", year of publication 2019;
- Meijndert C.M., Raghoebar G.M., Vissink A., Delli K., Meijer H.J.A.: "The effect of implant abutment connections on peri-implant bone levels around single implants in the aesthetic zone: A systematic review and a meta-analysis", year of publication 2021;
- Tumedei M., Piattelli A., Degidi M., Mangano C., lezzi G.: "A 30-Year(1988-2018) Retrospective Microscopical Evaluation of Dental Implants Retrieved for Different Causes: A Narrative Review", year of publication 2020;
- Scarano A., Valbonetti L., Degidi M., Pecci R., Piattelli A., de Oliveira P.S., Perrotti V.: "Implant-Abutment Contact Surfaces and Microgap Measurements of Different Implant Connections Under 3-Dimensional X-Ray Microtomography", year of publication 2016;
- Korsch M., Walther W.: "Retrospective analysis of loosening of cement-retained vs screw retained fixed implant-supported reconstructions", year of publication 2015;
- Wittneben J.G., Joda T., Weber H.P., Brägger U.: "Screw retained vs. cement retained implant supported fixed dental prosthesis", year of publication 2000;
- Assenza B., Scarano A., Leghissa G., Carusi G., Thams U., Roman F.S., Piattelli A.: "Screw- vs cement-implant-retained restorations: an experimental study in the Beagle. Part 1. Screw and abutment loosening", year of publication 2005;
- Lugas A.T., Terzini M., Zanetti E.M., Schierano G., Manzella C., Baldi D., Bignardi C., Audenino A.L.: "In Vitro Simulation of Dental Implant Bridges Removal: Influence of Luting Agent and Abutments Geometry on Retrievability", year of publication 2020.

Document CN 101366664 A discloses a dental implant according to the preamble of claim 1. Other dental implants according to the prior art are disclosed for example in documents US 2004/241610 A1, FR 3005259 A1 and US 2019/223987 A1.

Dental implants currently existing, whether one-stage or two-stage implants, require the dental crown to be coupled using connecting elements not pertaining to the dental implant, such as cement or retention screws. These connecting elements have several drawbacks. When the dental crown is cemented, it is subject to cement degradation and the possibility of uncontrolled extrusion into the tissues, with consequent risk of biological damage. On the other hand, the screw-retained dental crown inherently involve stress on the screws and imprecision due to the necessary tolerances.

A friction and shape coupling connection, with a truncated cone shape, which connects the cap to the prosthetic abutment provided on top of the endosseous screw, has been thus created for some dental implants. Thanks to its precision and stability, this connection, which is called "conometric" connection, does not require the aforementioned connecting elements.

However, two-stage dental implants with a conometric prosthetic connection, such as those resulting from the Ankylos^{®} technology from Denstply Sirona, have some drawbacks. In any case, the prosthetic abutment is separated from the endosseous screw: therefore, connecting elements are still necessary for this prosthetic abutment, which is subject to misalignments and micro-gaps, especially if interferences are encountered during positioning on the endosseous screw.

The current conometric prosthetic connection systems are generally based on the application of the cap by percussion, with little or no control over the coupling effectiveness and homogeneity, especially in dental bridges comprising multiple elements. Finally, a conometric connection dental crown currently requires the application of high forces for being removed, given the high level of precision of the components. In order to remove the dental crown, an extractor hammer is used which, through hook inserts, exerts uncontrolled forces, which can never be axial, with a potential mechanical risk for the prosthetic components and obvious discomfort or harm for the patients.

The object of the present invention is, therefore, to provide an improved dental implant which is capable of solving the above-mentioned drawbacks of the prior art in an extremely simple, economical and particularly functional way.

In detail, it is an object of the present invention to provide a dental implant which does not require percussive tools either during the application operations or during the removal operations for removing the prosthetic components of the dental implant.

Another object of the present invention is to provide a dental implant which ensures precision and control during the application and removal of the respective prosthetic components, improving stability and reducing risks for the patients and the prosthetic components.

These objects according to the present invention will be achieved by providing an improved dental implant as set forth in claim 1.

Further features of the invention are highlighted by the dependent claims, which are an integral part of the present description.

The features and advantages of an improved dental implant according to the present invention will be clearer from the following explanatory and hence non-limiting description, referring to the attached schematic drawings in which:
Figure 1 is a side elevation view of a preferred exemplary embodiment of the improved dental implant according to the present invention, but without the cap;
Figure 2 is a vertical section view of the dental implant of Figure 1, also showing the cap;

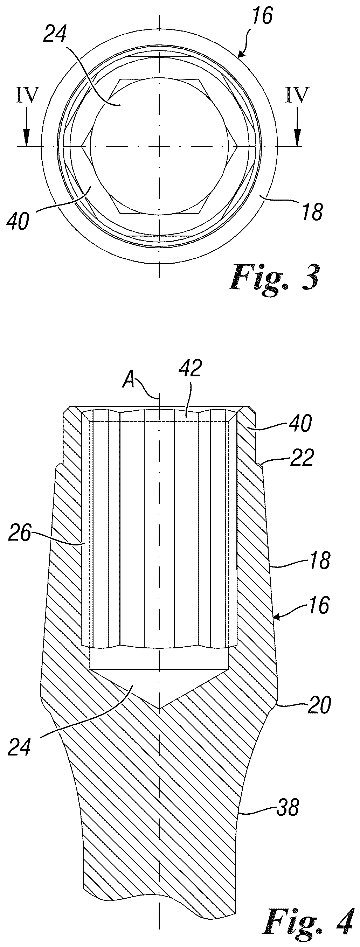

Figure 3 is a top plan view of the head portion, or prosthetic abutment, of the dental implant of Figure 1;
Figure 4 is a section view, taken along line IV-IV of Figure 3, of the head portion, or prosthetic abutment, of the dental implant of Figure 1;
Figure 5 is a side elevation view of the cap of the dental implant of Figure 1;
Figure 6 is a bottom plan view of the cap of Figure 5;
Figure 7 is a section view, taken along line VII-VII of Figure 6, of the cap of Figure 5;
Figure 8 is a side elevation view of a component of the dental implant of Figure 1;
Figure 9 is a top plan view of the component of Figure 8; and
Figure 10 is a section view, taken along line X-X of Figure 9, of the component of Figure 8.

With reference to the figures, a preferred embodiment of the improved dental implant according to the present invention is shown. The dental implant is indicated as a whole with reference number 10.

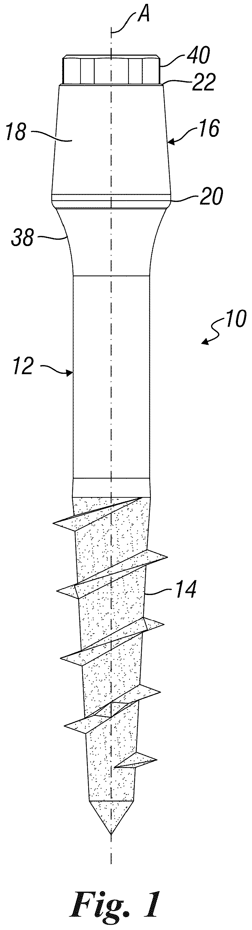

The dental implant 10 comprises, in a per se known manner and as shown in Figure 1, an endosseous screw 12 which extends along a predefined axis A. With reference to the axis A, it should be noted that the expression "cross-section" in the following description means a section which is taken along a plane perpendicular to this axis A.

The endosseous screw 12 comprises an at least partially threaded infra-osseous implant portion 14, which forms the lower portion of the endosseous screw 12, and which is designed to be inserted into the mandibular or maxillary bone tissue of a patient. The endosseous screw 12 further comprises an extra-osseous top portion 16, which is opposed along the axis A to the infra-osseous implant portion 14. The extra-osseous top portion 16 consists of the prosthetic abutment of dental implant 10 and is, therefore, designed to receive a dental crown (not shown).

The infra-osseous implant portion 14 and the extra-osseous top portion 16 of the endosseous screw 12 are integrally formed in a single piece. The dental implant is therefore of the one-stage type, as described above.

The endosseous screw 12 has a variable circular cross-section along the axis A. More specifically, from the lower end of the endosseous screw 12, the cross-section of the infra-osseous implant portion 14 gradually widens, until it reaches a connecting portion 38 which is preferably interposed between the infra-osseous implant portion 14 and the extra-osseous top portion 16.

In the embodiment shown in the figures, preferably the connecting portion 38 has a concave profile, with an increasing cross-sectional area from the infra-osseous implant portion 14 and towards the extra-osseous top portion 16. Again, preferably, this connecting portion 38 has an overall length, measured along the axis A, of about 2 mm and has a radius of curvature of about 4.7 mm.

The extra-osseous top portion 16 of the of the endosseous screw 12 is provided with a side wall 18 of a truncated cone shape, with a major base 20 facing the infra-osseous implant portion 14 and with a minor base 22 facing the top of the endosseous screw 12. The extra-osseous top portion 16 is, therefore, designed to create a so-called "conometric" coupling with the cap of the dental implant 10, which will be described in more detail below. Preferably, the extra-osseous top portion 16 consists of an externally smooth truncated cone, with a major base 20 having a diameter of about 3.5 mm, a height, measured along the axis A, which is between 4 mm and 4.3 mm and a total angle of 8° (4° for each semi-cone). These values, which are provided by way of non-limiting example, ensure an effective conometric coupling with the secondary prosthetic component or cap.

Preferably, above the minor base 22 of the extra-osseous top portion 16, thus on top of the endosseous screw 12, a prism-shaped protrusion 40 with a polygonal base is provided, which is integrally formed in a single piece with the extra-osseous top portion 16. Even more preferably, the protrusion 40 is prism-shaped with a hexagonal base and has a height, measured along axis A, which is about 0.85 mm. This protrusion 40 can be used as an index for positioning the overlying cap, as well as an anti-rotational impression transfer.

The extra-osseous top portion 16 of the endosseous screw 12 is internally provided with at least one blind hole 24 with circular cross-section, which develops along the axis A. The blind hole 24 is accessible from the top of the endosseous screw 12 and is provided with an internal thread 26. Preferably, the internal thread 26 of the blind hole 24 is a metric ISO M 1.4 x 0.3 thread.

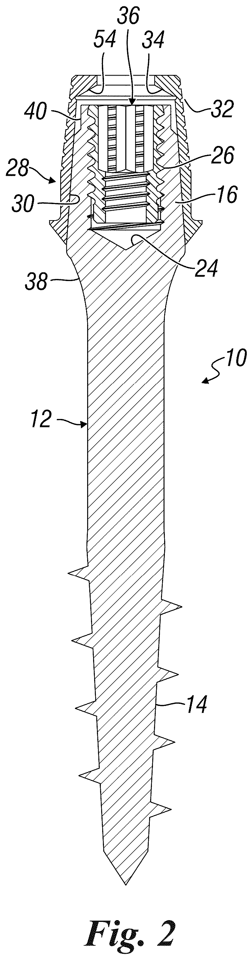

Preferably, the blind hole 24 is provided, at its upper opening and thus above the internal thread 26, with at least one portion of internal wall 42 of polygonal shape in cross-section (Figure 2). Even more preferably, the portion of internal wall 42 has a hexagonal shape with a height, measured along the axis A, which is about 0.2 mm. This portion of internal wall 42 can be engaged in a shape coupling by means of a tool, to allow the dental implant 10 to be positioned into the bone of the patient, after preparing the recipient site.

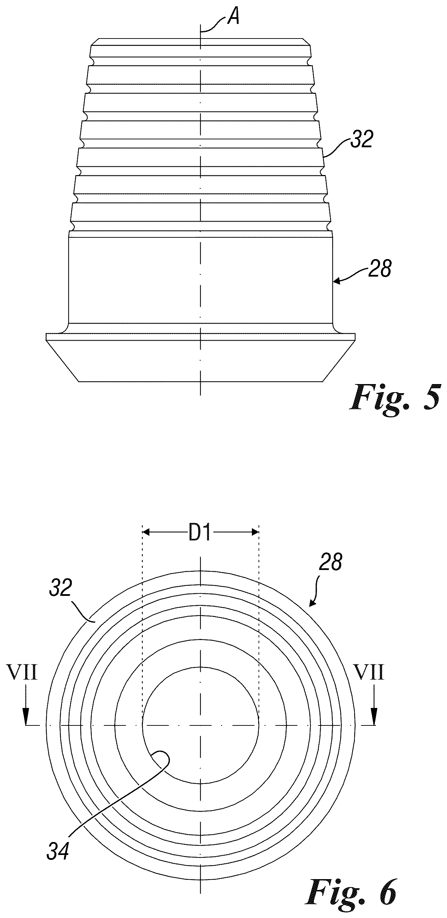

As shown in Figure 2 and in Figures 5 to 7, the dental implant 10 comprises at least one internally hollow cap 28, which connects with the extra-osseous top portion 16 of the endosseous screw 12 and which is arranged to be integrated into the dental crown. This cap 28 comprises in turn:
- an inner wall 30 of a truncated cone shape, which is arranged to couple, by friction and shape coupling, onto the side wall 18 of the extra-osseous top portion 16;
- an outer wall 32 also of truncated cone shape, which surrounds the inner wall 30 and which is arranged for the attachment of the dental crown; and
- a top through-hole 34, which faces the blind hole 24 of the endosseous screw 12 when the cap 28, with its respective dental crown, is connected to the respective extra-osseous top portion 16.

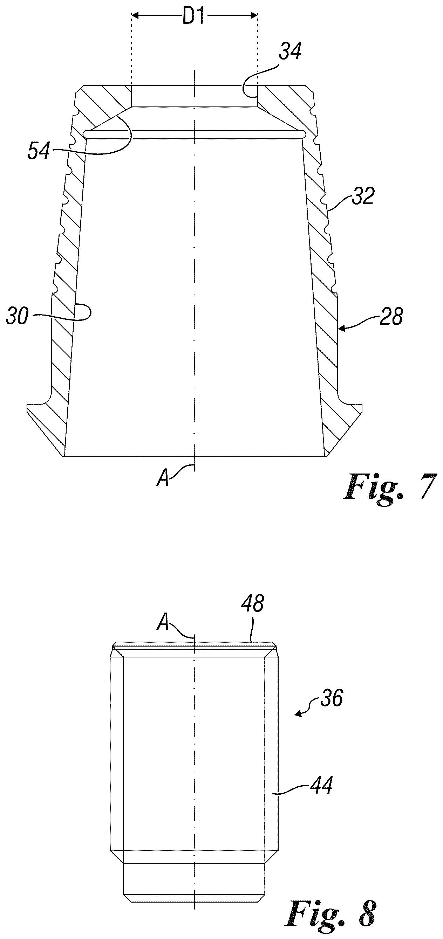

According to the invention, the dental implant 10 comprises at least one activator/extractor component 36, shown in Figures 8 to 19, which is insertable within the blind hole 24 of the endosseous screw 12. The activator/extractor component 36 consists of a cylindrical shaped body which comprises an external thread 44 having the same pitch as the internal thread 26 of the blind hole 24 of the endosseous screw 12. The activator/extractor component 36 can be thus screwed into the blind hole 24. So, preferably, the external thread 44 of the activator/extractor component 36 is the same metric ISO M 1.4 x 0.3 thread provided inside the blind hole 24.

The activator/extractor component 36 further comprises an internal cavity 46 provided sequentially, from an upper edge 48 of the activator/extractor component 36, with a shaped surface 50 and a nut-screw 52. The shaped surface 50 and the nut-screw 52 are arranged to engage with suitable tools (such as a suitably shaped screwdriver) in such a manner that, when a respective tool is engaged with the activator/extractor component 36, it is possible to selectively perform the activation of the shape coupling between the cap 28 and the extra-osseous top portion 16, the adjustment of the force of such shape coupling and the extraction of the cap 28 from the extra-osseous top portion 16. Preferably, the thread of the nut-screw 52 is a metric ISO M 1.4 x 0.3 thread.

The dental implant 10 described so far works as follows. The endosseous screw 12 is inserted in a per se known manner into the mandibular or maxillary bone tissue of a patient. The cap 28 is connected by conometric friction onto the extra-osseous top portion 16 of the endosseous screw 12, these two components having the same conicity. Once the conometric coupling has been activated, by means of pressure, between the cap 28 and the extra-osseous top portion 16 of the endosseous screw 12, no cement or retentive screw is necessary to keep this cap 28 stably in place with the respective dental crown.

Should it be necessary to remove the cap 28, with the respective dental crown, from the extra-osseous top portion 16 of the endosseous screw 12, the force required for removal can be considerable, making the prosthetic maneuvers complex. One of the functions of the activator/extractor component 36 is therefore to easily overcome this force.

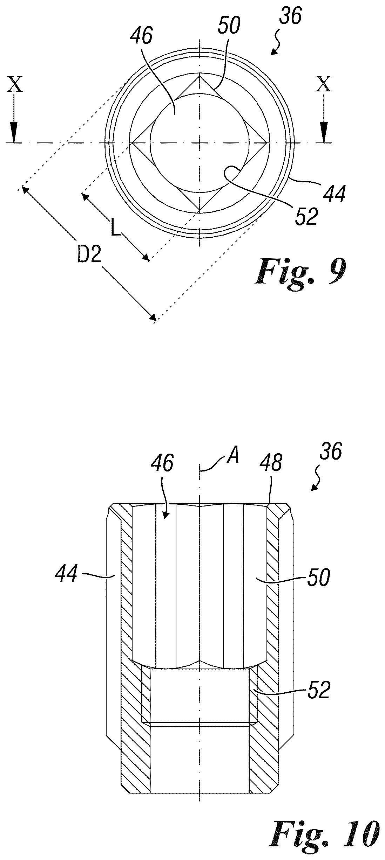

The procedure for removing the cap 28 from the extra-osseous top portion 16 of the endosseous screw 12 is therefore carried out by unscrewing the activator/extractor component 36, previously screwed into the blind hole 24. A screwdriver of suitable dimensions (for example a screwdriver with a 1.15 mm diameter impression) is inserted through the through-hole 34 of the cap 28, until such screwdriver engages the shaped surface 50 of the activator/extractor component 36. The shaped surface 50 of the activator/extractor component 36, in fact, preferably has a quadrangular shape in cross-section, with a maximum width L (Figure 9) that is compatible with the dimensions of the screwdriver (for example a maximum width which is equal to about 1.15 mm). The through-hole 34 of the cap 28, in turn, is preferably a circular hole having an inner diameter D1 (Figures 6 and 7) which is greater than the maximum width L of the shaped surface 50 of the activator/extractor component 36. Even more preferably, the inner diameter D1 of the through-hole 34 of the cap 28 is equal to about 1.75 mm.

Applying a predefined torque (for example equal to 40 N/cm), the activator/extractor component 36 is unscrewed. Since the cylindrical-shaped body of the activator/extractor component 36 has an outer diameter D2 (Figure 9) which is larger than the inner diameter D1 of the through-hole 34, when the activator/extractor component 36 rises by unscrewing along the axis A, the upper edge 48 of such activator/extractor component 36 engages a toroidal contact wall 54 provided between the inner wall 30 and the through-hole 34 of the cap 28. The cap 28 is thus easily removed from the from the extra-osseous top portion 16 of the endosseous screw 12 by axial lifting the cap 28.

The activator/extractor component 36 also has the function of activating the conometric coupling between the cap 28 and the prosthetic abutment 16. When the activator/extractor component 36 is screwed into position inside the blind hole 24 of the endosseous screw 12 and the cap 28 is positioned above the extra-osseous top portion 16, a threaded tightening tool with a torque wrench is passed through the through-hole 34 of the cap 28, until it reaches the nut-screw 52 of the activator/extractor component 36. By applying a predefined and constant torque (for example equal to 15 N/cm), measured with the torque wrench, the threaded tightening tool screws into the nut-screw 52 and simultaneously pushes the cap 28 against the extra-osseous top portion 16 of the endosseous screw 12 with a constant force, predictable and replicable in all the prosthetic phases.

The activator/extractor component 36, therefore, is not an active connecting element between the cap 28 and the extra-osseous top portion 16. The activator/extractor component 36, once screwed into the blind hole 24 of the endosseous screw 12, provides, without moving, a screwing point for the respective threaded tightening tool through its own nut-screw 52. Once its function has been performed, this threaded tightening tool is removed, while the activator/extractor component 36 remains passively inside its seat (the blind hole 24 of the endosseous screw 12) until the extraction is required.

The nut-screw 52 of the activator/extractor component 36 can also be used to permanently house retention screws for prosthetic tubes and closure screws for gingival adapters (also known as "healing abutments").

The dental implant 10 described so far brilliantly overcomes the limitations of the existing implant-prosthetic solutions. Its strength lies in the combination of the best mechanical characteristics of connection stability among the respective components, together with control and ease of use.

It has thus been seen that the improved dental implant according to the present invention achieves the previously highlighted objects, in particular obtaining the following advantages:
- highest mechanical stability of the coupling between the endosseous screw and the cap with the respective dental crown;
- versatility: in the case where a dental crown with a cap without a through hole is to be applied, the conometric coupling can be still activated simply by pressing;
- thanks to the torque wrench, the intrusive force of the prosthetic components can be replicated at each step;
- regardless of the activation force, an extraction tool is provided which allows the conometric decoupling of the prosthetic component without the need for extraction hammers or insertion tools;
- total absence of misalignments and micro-gaps, thereby reducing the risk of bacterial growth;
- reduction in components and costs compared to conventional dental implants.

The dental implant of the present invention thus conceived is however susceptible of numerous modifications and variations, all of which falling within the scope of protection of the attached claims; furthermore, all details can be replaced by technically equivalent elements. In practice, the materials used, as well as the shapes and dimensions, can be any according to the technical requirements.

The scope of protection of the invention is therefore defined by the attached claims.

## Claims

1. A dental implant (10) comprising an endosseous screw (12) which extends along a predefined axis (A), the endosseous screw (12) having a variable circular cross-section along said axis (A), the endosseous screw (12) comprising:
- an at least partially threaded infra-osseous implant portion (14), which forms the lower portion of the endosseous screw (12), and which is designed to be inserted into the mandibular or maxillary bone tissue of a patient; and
- an extra-osseous top portion (16), which is opposed along said axis (A) to the infra-osseous implant portion (14), and which is designed to receive a dental crown,
wherein said infra-osseous implant portion (14) and said extra-osseous top portion (16) are integrally formed in a single piece, wherein said extra-osseous top portion (16) is provided with a side wall (18) of a truncated cone shape, with a major base (20) facing said infra-osseous implant portion (14) and with a minor base (22) facing the top of the endosseous screw (12), wherein said extra-osseous top portion (16) is internally provided with at least one blind hole (24) with circular cross-section, which develops along said axis (A), which is accessible from the top of the endosseous screw (12) and which is provided with an internal thread (26), and wherein the dental implant (10) further comprises at least one internally hollow cap (28), which connects with said extra-osseous top portion (16) and which is arranged to be integrated into the dental crown, said cap (28) comprising in turn:
- an inner wall (30) of a truncated cone shape, which is arranged to couple, by friction and shape coupling, onto the side wall (18) of said extra-osseous top portion (16);
- an outer wall (32) of truncated cone shape, which surrounds said inner wall (30), and which is arranged for the attachment of the dental crown; and
- a top through-hole (34), which faces said blind hole (24) when said cap (28), with
its respective dental crown, is connected to said extra-osseous top portion (16), the dental implant (10) being **characterized in that** it comprises at least one activator/extractor component (36) which is insertable within said blind hole (24), said activator/extractor component (36) consisting of a cylindrical shaped body comprising:
- an external thread (44) having the same pitch as the internal thread (26) of said blind hole (24), so that said activator/extractor component (36) can be screwed into said blind hole (24); and
- an internal cavity (46) provided sequentially, from an upper edge (48) of said activator/extractor component (36), with a shaped surface (50) and a nut-screw (52),
wherein the cylindrical shaped body of said activator/extractor component (36) has an outer diameter (D2) which is larger than the inner diameter (D1) of said top through-hole (34), and wherein said shaped surface (50) and said nut-screw (52) are arranged to engage with a tool in such a manner that, when said tool is engaged with said activator/extractor component (36) through said top through-hole (34), it is possible to selectively perform:
- the activation of the shape coupling between said cap (28) and said extra-osseous top portion (16),
- the adjustment of the force of said shape coupling, by screwing the tool into said nut-screw (52) and simultaneously pushing said cap (28) against said extra-osseous top portion (16), and
- the extraction of said cap (28) from said extra-osseous top portion (16), by engaging the tool with said shaped surface (50) and unscrewing said activator/extractor component (36) so that said activator/extractor component (36) engages and lifts said cap (28).

2. The dental implant (10) according to claim 1, wherein above the minor base (22) of said extra-osseous top portion (16), thus on top of the endosseous screw (12), a prism-shaped protrusion (40) with a polygonal base is provided, which is integrally formed in a single piece with said extra-osseous top portion (16).

3. The dental implant (10) according to claim 1 or 2, wherein said blind hole (24) is provided, at its upper opening and thus above the internal thread (26), with at least one portion of internal wall (42) of polygonal shape in cross-section.

4. The dental implant (10) according to any one of claims 1 to 3, wherein the shaped surface (50) of said activator/extractor component (36) has a quadrangular shape in cross-section, with a maximum width (L) that is compatible with the dimensions of said tool.

5. The dental implant (10) according to claim 4, wherein the top through-hole (34) of said cap (28) is a circular hole having an inner diameter (D1) which is greater than said maximum width (L).

6. The dental implant (10) according to any one of claims 1 to 5, wherein between the inner wall (30) and the top through-hole (34) of said cap (28) at least one contact wall (54) is provided, which is arranged to be engaged by the upper edge (48) of said activator/extractor component (36).

7. The dental implant (10) according to claim 6, wherein said contact wall (54) is toroidal.

8. The dental implant (10) according to any one of claims 1 to 7, wherein between the infra-osseous implant portion (14) and the extra-osseous top portion (16) is interposed a connecting portion (38) having a concave profile and an increasing cross-sectional area from said infra-osseous implant portion (14) and towards said extra-osseous top portion (16).

9. The dental implant (10) according to any one of claims 1 to 8, wherein the external thread (44) of said activator/extractor component (36) and the internal thread (26) of said blind hole (24) are both metric ISO M 2.3 x 0.4 threads.

10. The dental implant (10) according to any one of claims 1 to 9, wherein the thread of the nut-screw (52) of said activator/extractor component (36) is a metric ISO M 1.4 x 0.3 thread.
